# EUROPEAN PATENT APPLICATION

(11) **EP 2 226 978 A1**
(43) Date of publication of application: **08.09.2010**
(21) Application number: 09158206.4
(22) Date of filing: 20.04.2009
(51) Int. Cl.: H04L 12/58

(54) **Method for electronic mail communications**

(30) Priority: 04.03.2009 US 157387 P
(71) Applicant: Prat, M. Grégoire, 75017 Paris (FR)
(72) Inventor: Prat, M. Grégoire, 75017 Paris (FR)
(74) Representative: Lebkiri, Alexandre

(57) **Abstract**

The present invention relates to a method for electronic mail communications. More precisely, the invention has for object a method for sending an electronic mail from a computer, said method comprising a step (1) of launching a local client software running on said computer, a step (6) of retrieving by said local client software configuration data associated with the account from a web service, a step of receiving by said local client software an electronic mail message to be sent and a step of determining whether to add an electronic mail stamp to said received electronic mail message based on said electronic mail message and said retrieved configuration data. If the electronic mail stamp is to be added (9), the method further comprises a step of adding the electronic mail stamp to the electronic mail message according to said retrieved configuration data.

## Description

The present invention relates to a method for electronic mail communications.

Electronic Mail (e-mail) is a standard type of electronic messaging on the Internet, and E-mail has become a commonly used format for communication. The use of e-mail for exchanging messages between users of a packet network, particularly the Internet, is becoming more and more popular, owing to the great ease of use, the greater speed of message delivery (by comparison with the normal transmission of hard copy), the low cost of transmission, especially in the case of users living at great distances from each other, such as users living in different countries (by comparison with the cost of a telephone call), the possibility of attaching files of any type, such as pictures, video clips, texts, etc., to the messages to be transmitted. E-mail messages are addressed to a recipient, optionally addressed from a sender, and are delivered to a recipient's e-mail inbox.

The aim of the present invention is to provide a method for electronic mail communications allowing improved ways of communications for companies using such method.

The invention also results from the finding that E-mail messages share characteristics in common with postal mail. However, e-mail messages do not require or allow for the use of postal stamps. As a result, senders of e-mail messages lack the ability to express themselves or their political affiliation through use of a particular stamp. Accordingly, senders of e-mail messages lack an ability to inform a recipient of the e-mail message of different information such as for instance support of a cause through use of a particular stamp.

Accordingly, the object of the invention is a method for sending an electronic mail from a computer, said method comprising:
- a step of launching a local client software running on said computer,
- a step of retrieving by said local client software configuration data associated with the account from a web service, said web service being configured to:
   ○ receive request to store configuration data indexed by account, said configuration data being stored in a database server and including supported electronic mail domains, excluded electronic mail senders, excluded electronic mail recipients, and electronic mail stamp settings ;
   ○ receive request from local client software for configuration data associated with the account,
   ○ retrieve the configuration data from the database server according to the request, and provide to local client software the configuration data in response to the request;
- a step of receiving by said local client software an electronic mail message to be sent;
- a step of determining whether to add an electronic mail stamp to said received electronic mail message based on said electronic mail message and said retrieved configuration data; and
- if the electronic mail stamp is to be added, a step of adding the electronic mail stamp to the electronic mail message according to said retrieved configuration data.

One has to note that an electronic mail stamp (called "SMail" in the following description) may be defined as a graphical link; it means that when a recipient clicks on a SMail, he receives a link to an Internet page such as a page presenting actions supported by the sender.

Thanks to the invention, it is possible to strongly improve communications by e-mail for companies using such method. The company can indeed configure settings corresponding to configuration data entered via the Web service interface. Such configured settings (typically mail domains that have to be covered, excluded e-mails, categories of electronic stamps, duration of the diffusion for a category of stamp...) are then used by each local client software interfacing with web service and gathering configuration data that will be used locally. Thus, according to the invention, an electronic stamp having specific properties is included automatically in selected e-mails sent by all users having the same configuration data corresponding to the whishes of the company.

SMail is an electronic stamp showing for instance the sender's involvement in a humanitarian cause or programs of protection of the natural patrimony via an e-mail. The method according to the invention enables individuals and companies to add value to their image by adding a stamp over the SMails they have chosen for all or part of their outgoing e-mails thanks to a local client software. Typically, when a recipient clicks on the SMail, he receives a link to a page presenting actions supported by the sender. The standardized presentation text may be automatically displayed into the language of the recipient's browser.

According to particular embodiments, the method according to the invention may comprise one of the following characteristics taken individually or in combination:
- said step of retrieving by said local client software configuration data is done periodically;
- said step of determining whether to add an electronic mail stamp to said received electronic mail message based on said electronic mail message comprises a step of determining whether said received electronic mail message is a text message and, if the received electronic mail message is a text message, a step of excluding said electronic mail message from having an electronic mail stamp included;
- said step of determining whether to add an electronic mail stamp to said received electronic mail message based on said electronic mail message comprises a step of determining whether said electronic mail message is encoded in base 64 and,
   ○ if said electronic mail message is encoded in base 64, a step of decoding said electronic mail message followed by the step of adding the electronic mail stamp to the electronic mail message and the step of re-encoding the electronic mail message including said mail stamp;
   ○ if said electronic mail message is not encoded in base 64, the step of adding directly the electronic mail stamp to the electronic mail message;
- said step of adding the electronic mail stamp to the electronic mail message comprises a step of searching the beginning of the BODY section of said electronic mail message and the BODY end tag;
- the method according to the invention comprises a step of determining whether said electronic mail message is configured to be sent to a gateway and,
   ○ if said electronic mail message is configured to be sent to a gateway, a step of sending said electronic mail message to said gateway;
   ○ if said electronic mail message is not configured to be sent to a gateway, a step of sending said electronic mail message to recipient(s) indicated by said electronic mail message;
- said step of retrieving by said local client software configuration data associated with the account from a web service comprises a step of determining whether said local client software is up to date and, if the version of said local client software is less than the latest version, a step of downloading a retrieve last version;
- said local client software running on said computer is minimized to an icon such as an icon in the system tray notification of the Microsoft Windows™ taskbar;
- said step of receiving request by web service to store configuration data indexed by account comprised a step of selecting electronic mail stamp to be included in electronic mail message among a plurality of electronic mail stamp categories;
- said step of selecting electronic mail stamp comprises a step of selecting a certain period of time and/or certain electronic mail domains for using said selected electronic mail stamp.
   The present invention has also for object a system comprising:
- a database server configured to store and retrieve configuration data indexed by account, the configuration data including supported e-mail domains, excluded e-mail senders, excluded e-mail recipients, and e-mail stamp settings;
- a web service, configured to:
   ○ receive requests to store configuration data indexed by account; and
   ○ receive requests for configuration data associated with the account;
   ○ retrieve the configuration data from the database server according to the request, and provide the configuration data in response to the request;
- a web server configured to:
   ○ receive a request to create an account;
   ○ receive configuration data associated with the account; and
   ○ send the configuration data to the web service to be stored in the database; and
- a computer comprising local client software configured to:
   ○ retrieve configuration data associated with the account from the web service;
   ○ receive an e-mail message to be sent;
   ○ determine whether to add an e-mail stamp to the received e-mail based on the e-mail message and the retrieved configuration data; and
   ○ if the e-mail stamp is to be added, add the e-mail stamp to the e-mail message according to the retrieved configuration data.

The foregoing aspects and many of the attendant advantages of this invention will become more readily appreciated as the same becomes better understood by reference to the following detailed description when taking in conjunction with the accompanying drawings which represent:
- Fig. 1 illustrates an exemplary process flow for an application for sending SMails;
- Fig. 2 illustrates an exemplary process flow for configuration management;
- Fig. 3 illustrates an exemplary process flow for managing SMails in an application for sending SMails;
- Fig. 4 illustrates an exemplary process flow for adding a SMail by an application for sending SMails.

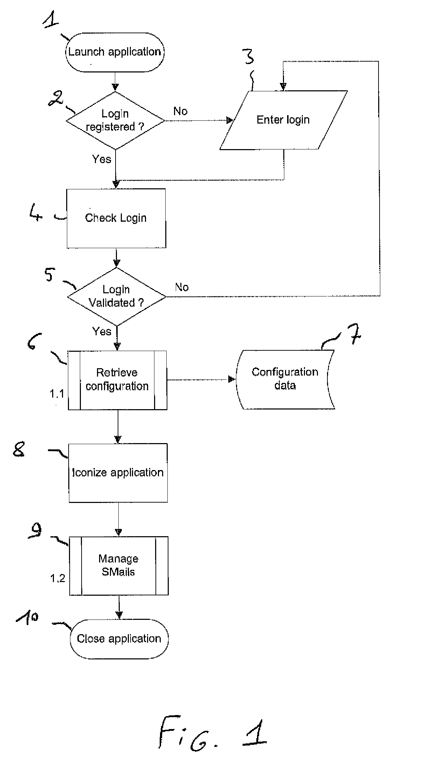

Fig. 1 shows an exemplary embodiment of the method for sending an electronic mail according to the invention.

The process flow as illustrated in the figure 1 begins in the launch application step (step 1). In this step, an application such as a local software program running on a local computer may be launched. The application may be implemented as hardware, software, and in any combination. Such software generally includes instructions stored on a computer readable medium.

Before launching the local software, it may be necessary to create a SMail account for a user. The user may be a company or an individual, and the account may be set up as a company account or an individual account.

The local computer may be any general purpose computing device, such as a PC, or a specialized device. The local computer may have software, such as an operating system with a network protocol stack, for establishing network connection to servers. For instance, the local computer may have web browsing software including software instructions configured to provide access a web based user interface provided by a web server. The local computer may use the web browser, or other software implementing the Hyper Text Transfer Protocol (HTTP) to communicate with the web server.

When the user subscribes to SMail, the user may be connected to the SMail website provided by the web server. The web server may be a server or other computing device that includes a processor, memory, and computer-readable medium, and may include software such as web server software as is known for providing web pages and the like. The user may use the website to add an account. On this web page the user may enter all the information necessary concerning data for the account. In the case of a company account, the user may enter the company information, while in the case of an individual account the user may enter details of the individual.

For example, a company may be based in New York city, and have a subsidiary company located in Paris, France. Each office of the company may have a different e-mail domain. The New York company may have an e-mail domain with a .com address, while the Paris office may have an e-mail domain with a .fr address. In other examples, a company may have multiple offices but only one e-mail domain.

In any event, a user may subscribe to SMail for the two indicated e-mail domains of the company, and may desire to have different SMail settings for each e-mail domain. The New York office may subscribe the company through use of the SMail website and download the SMail software. Then, the New York office may inform the Paris office of the username and password. Using the username and password, the Paris office may also download and install the SMail software. Instructions for how to use the client software may also be available on the SMail website to indicate to a user how to set up, use, and synchronize the local SMail software.

Moreover, there may be multiple versions of the local software based on the type of account created. A first version of the local software may be for individual users who access their e-mail through use of a local e-mail client connected to an e-mail server (e.g., via POP-3, IMAP, etc.). This version of the local software may be downloaded by an individual SMail user. The software may run on the user's computer and may allow for the embedding of SMails into e-mails sent by the user from an e-mail client (e.g., Microsoft Outlook™, Thunderbird™, Eudora™, etc.) running on the user's computer.

A second version of the local software may be for companies with multiple users and their own e-mail server. This version of the local software may be downloaded by a company and may be configured to be run on or in combination with the company's e-mail server. Thus, this version of the software may allow for the embedding of SMails into e-mails sent using the company's e-mail server.

The second version of the local software may additionally be available for use by an e-mail service provider that allows for web access of e-mail, such as Yahoo! Mail™, Google GMail™, etc. In the alternative, a third version of the software specifically configured for use by e-mail service providers may be downloadable by an e-mail provider.

Versions of the local software may be available for multiple Operating Systems including, but not limited to, Linux™, Microsoft Windows™, and Mac OS X™.

In any event, once the account is created and the proper local software is downloaded, the user may run the local software and begin to use SMail.

Returning to the flow diagram of Fig. 1, once the local software is running it may determine whether a login has been registered (step2). When the user downloads the local software from the SMail website, the user may be required to enter login information to enable the software to retrieve configuration data via a Web Service (step 3). Once the user has installed the software and entered in the login information, the login information may be registered locally to avoid the user being required to re-enter it for every launch of the software. If the login has been registered, then the local software may proceed to the check login step (step 4). Otherwise, the local software may proceed to an enter login step.

In the enter login step, a user may enter login information. For example, the user may enter a username and a password. Next, the local software may proceed to a check login step.

In the check login step, the local software may check the entered login credentials. For example, the local software may verify an entered username and password against a password file of known users. Next, the local software may proceed to a login validation step (step 5).

In the login validation step, the local software may determine if the login credentials are correct. If the login credentials are correct, then the local software may proceed to a retrieve configuration step (step 6). Otherwise, the local software may return to the enter login step.

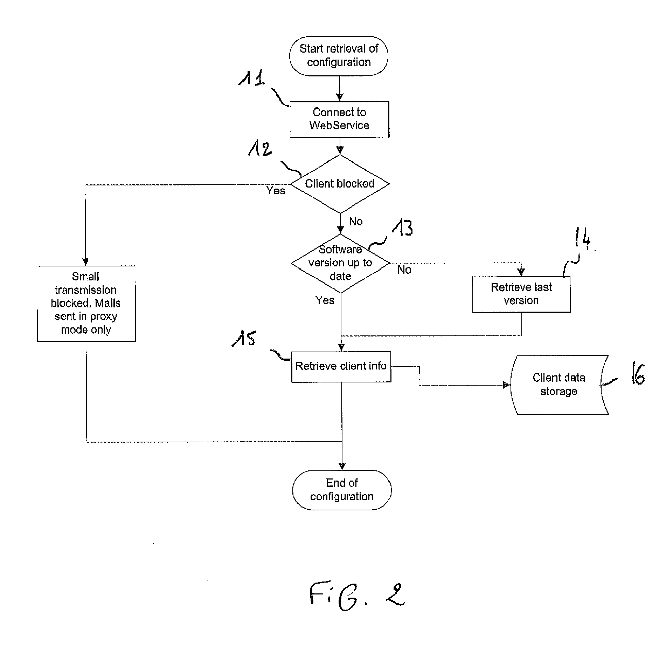

In the retrieve configuration step, the local software may retrieve the configuration data for the username that is logged in. The configuration step may retrieve configuration data according to the configuration associated with the user. Details of the retrieve configuration step are discussed in more detail with regard to Fig. 2 below.

Continuing with the company example, from the New York office, the company may manage the SMail settings for both e-mail domains. Alternately the New York office may delegate to the Paris office to manage its own e-mail domain. For example, the company may select to use a yellow SMail to fight against poverty from January through March for the .fr e-mail domain, and a red SMail for the fight against AIDS for the .com e-mail domain. Additionally, at the end of the year the company may reconfigure the .fr and .com e-mail domains to share a more similar configuration, for example for each to use the same SMail category.

These settings that are configured through the SMail website may be stored in a database on a database server, where the database server may be communicatively coupled to a data store. Database servers generally provide access to various facilities that combine programming logic, processing power, and data and file access. The database server may provide software instructions that regulate access to the facilities provided by the database server, such as data held in the data store. Other facilities of the database server may include software functions for manipulating and interacting with data stored in the data store. The facilities of the database server are not limited to use of the data store. For instance, the facilities could also include access to files, other computer systems, access to any other electronic resource that has restricted or protected access, etc.

The data store may be a relational database management system (RDBMS). Many such systems, including SQL Server™, Oracle™, and MySQL™, among others, are generally available. The data store generally stores data in row and column table format, and may include multiple tables. A row, or record, includes one or more columns, or fields, holding data values for specifically defined fields. Rows may be uniquely identified by the values of one or more columns. Indexes of one or more columns can be included to aid in searching for particular rows of the table.

Periodically, such as every half-hour, the client software at the company sites (e.g., New York site, Paris site) may synchronize (step 7) the configuration data with the software locally installed. The local software may include software instructions for interacting with a WebService, where the WebService may provide the configuration data needed by the software. A WebService is a software system designed to support interoperable machine-to-machine interaction over a network. WebServices may provide Web Application Programming Interfaces (APIs) that may be accessed over a network, such as the Internet, and executed on a remote system hosting the requested services. In many examples, a WebService includes clients and servers that communicate using the Hypertext Transfer Protocol (HTTP) over Secure Sockets Layer (SSL). The local software may send a client or user id to the WebService in order to authenticate the local software with the WebService and to allow the WebService to retrieve the appropriate SMail configuration data from the data store and send the configuration data to the local software. The synchronization of the client software with updated configuration data may be performed through a secure connection (e.g., SSL) to the WebService. In this way, the client software may stay synchronized with the current settings, regardless of whether the client computer is running in the United States, in France, or at some other location, such as China.

Next, the software may proceed to an iconize application step (step 8).

In the iconize application step, the local software may be minimized or otherwise hidden from view. For example, for a user running the individual version of the local software, the local software may not be required to maintain a visible window. The local software may minimize to an icon, such as an icon in the system tray notification area of the Microsoft Windows taskbar. The individual version of the software may provide a further feature for indicating that a computer sending SMail messages may have been hacked, based on detection of SPAM e-mail messages originating from the computer. If the local software detects an abnormal volume of outgoing e-mails concerning an individual mailbox or an abnormal timeframe for sending e-mail messages, the software may provide a message in a popup window to alert the user that his mailbox may be used by a trojan. For example, the message may be provided to the user in a popup window originating from the icon in the system notification area. The message may inform the user that the SMail software has detected that the computer may be compromised and sending SPAM messages.

Next, the local software may proceed to a manage SMails step (step 9).

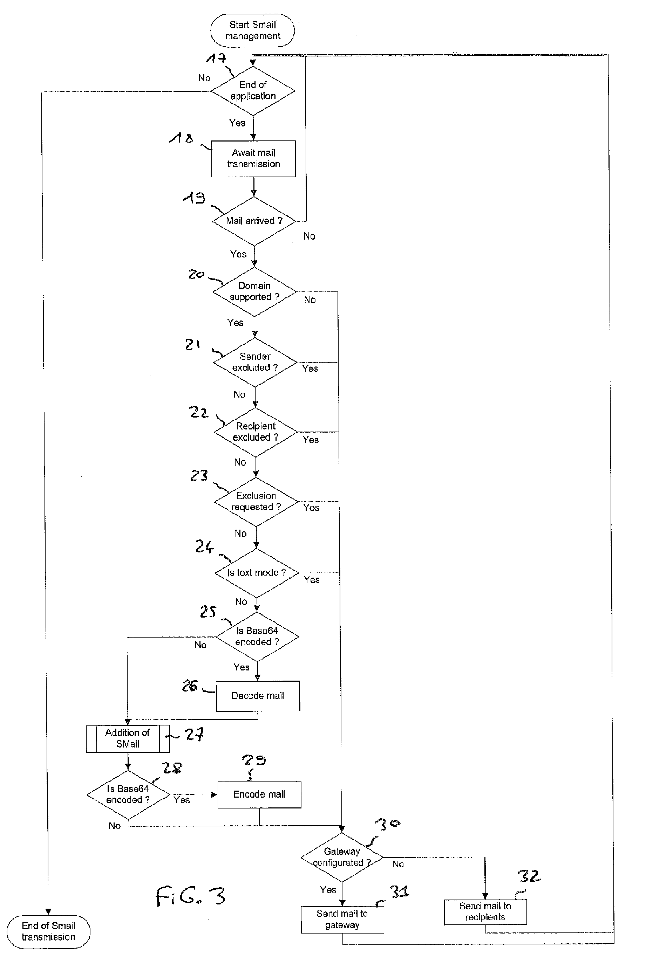

In the manage SMails step, the local software may await e-mail transmissions and selectively add SMail to the e-mail transmissions according to the retrieved configuration data. Details of the manage SMails step are discussed in more detail with regard to Fig. 3 below.

The application may stay in the manage SMails step indefinitely, but once the step is complete, the application may be closed (step 10). For example, the local software may be closed automatically, or may be closed based on a command issued by a user. Once the local software is closed, the process flow ends.

Fig. 2 illustrates an exemplary process flow for configuration management. As indicated above, the exemplary flow of Fig. 2 discloses additional details of the retrieve configuration step of Fig. 1.

Configuration management begins in a connect to WebService step (step 11), in which the local software connects to a WebService. For example, the local software may connect to the WebService with an HTTP over SSL connection using the login information.

Next, in the client blocked step, the system determines whether the client is blocked (step 12). If a client is blocked, then a SMail transmissions blocked step is executed next and updated configuration data is not downloaded to the local software. If the SMail transmissions are blocked, e-mails will be sent in proxy mode only, and will not use SMail features.

Then, the flow of Fig. 2 returns to Fig. 1, and the iconize application step of Fig. 1 is executed next, as described above. Otherwise, if the client is not blocked, a software version up to date step (step 13) is executed next.

In the software version up to date step, the system determines whether the local software version is up to date. For example, the version number of the local software and a latest software version known to the WebService may be compared. If the software version is less than the latest version, then the software is not up to date and a retrieve last version step (step 14) is executed next. In the retrieve last version step, the current software version is downloaded. Then, the retrieve client info step (step 15) is executed next. If the software is up to date, then the retrieve client info step is executed next without retrieving the current local software version.

In the retrieve client info step, the local software receives the current configuration data from the WebService. The local software stores the configuration data in a client data store 16 that is accessible by the local software. In this way, the local software may become synchronized with the current configuration data. The local software may then use the configuration data, for example, for managing SMails.

Next, the flow of Fig. 2 returns to Fig. 1, and the iconize application step of Fig. 1 is executed next, as described above.

Fig. 3 illustrates an exemplary process flow for managing SMails in an application for sending SMails. As indicated above, the exemplary flow of Fig. 3 discloses additional details of the manage SMails step of Fig. 1.

SMail management begins when the local software enters the manage SMails step, discussed above.

In the end of application step (step 17), the application determines whether the application is to end. For example, the application may receive a command or notification indicating for the application to end. In some examples, a command to end may be issued by a user. In some examples, a command to end may be issued by an operating system under which the local software is run. If the software is determined to end, then the process ends. Otherwise, an await mail transmission step (step 18) is executed next.

In the await mail transmission step, the local software waits for the transmission of an e-mail message. Next, it is determined whether an e-mail message has arrived (step 19). If no, then the end of application step is executed next. If an e-mail message has arrived, then a domain supported step (step 20) is executed next.

In the domain supported step, the local software determines whether the domain is supported according to the current configuration data. If yes, then a Sender excluded step (21) is executed. Otherwise, a gateway configured step (step 30) is executed next.

In the sender excluded step, the local software determines whether to include a SMail in the e-mail message based on the sender according to the current configuration data. If yes, then a recipient excluded step (step 22) is executed next. Otherwise, the gateway configured step (step 30) is executed next.

In the recipient excluded step, the local software determines whether to include a SMail in the e-mail message based on the recipient of the message according to the current configuration data. If yes, then an exclusion requested step (step 23) is executed next. Otherwise, the gateway configured step (step 30) is executed next.

In the exclusion requested step, the local software determines whether to exclude the e-mail message from having a SMail included. If no, then an is text mode step (step 24) is executed next. Otherwise, the gateway configured step (step 30) is executed next.

In the is text mode step, the local software determines whether to exclude the e-mail message from having a SMail included because the e-mail message is a text message and thus cannot support the inclusion of a graphical SMail link. If no, then an is base 64 encoded step (step 25) is executed next. Otherwise, the gateway configured step (step 30) is executed next.

In the is base 64 encoded step, the local software determines whether the e-mail is encoded in base 64. If yes, then the e-mail message is decoded (step 26) and then an addition of SMail step (step 27) is executed. Otherwise the addition of SMail step (step 27) is executed directly.

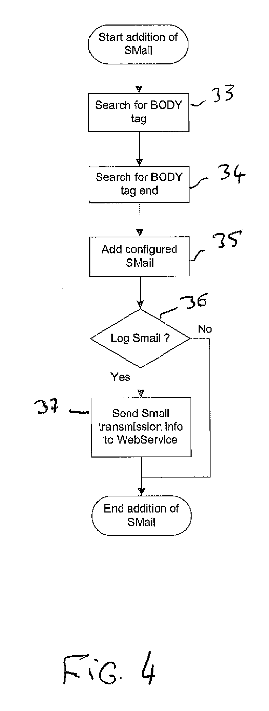

In the addition of SMail step, an appropriately configured SMail is added to the e-mail message. The exemplary flow of Fig. 4 discloses additional details of the addition of SMails step, described in detail below.

Next, if the e-mail was base 64 encoded (step 28), the e-mail message is re-encoded as base 64 (step 29) and the gateway configured step (step 30) is executed next. Otherwise the gateway configured step is executed directly.

In the gateway configured step, it is determined whether the e-mail message is configured to be sent to a gateway (step 31). If yes, then the e-mail message is sent to the gateway. Otherwise, the e-mail is sent to recipients (step 32) indicated by the e-mail message. Next, process flow returns to the end of application step.

Fig. 4 illustrates an exemplary process flow for adding a SMail by an application for sending SMails. As indicated above, the exemplary flow of Fig. 4 discloses additional details of the addition of SMail step of Fig. 3.

In a search for BODY step (step 33), the local software searches the e-mail message for the beginning of the BODY section of the e-mail message. Next, the local software searched for the BODY end tag (step 34).

Next, the local software adds a SMail to the message according to the current configuration data (step 35).

Next, the local software determines whether to log the SMail (step 36). For example, the determination to log may be made according to a setting in the current configuration data. If it is determined to add a log entry, the local software sends SMail transmission information (step 37) to a WebService that logs the SMail information. If the SMail is logged then it may be included in the display of statistics. If not, then the local software does not send the SMail transmission information to be logged. Then, the flow of Fig. 4 returns to Fig. 3, and the is base 64 step of Fig. 3 is executed next, as described above.

Certain devices of the system, such as local computer, company e-mail server, web server, database server, and other devices mentioned herein may employ any of a number of known computer operating systems. For example, such devices may use any known versions and/or varieties of the Microsoft Windows™ operating system; the Apple Mac OS X™ operating system, the Unix™ operating system (e.g., the Solaris operating system distributed by Sun Microsystems™ of Menlo Park, California); the AIX UNIX™ operating system distributed by International Business Machines of Armonk, New York; and the Linux™ operating system and the Vortex operating system distributed by Motorola™, Inc. of Schaumberg, Illinois. Computing devices may include any one of a number of computing devices that are known, including, without limitation, a computer workstation, a desktop, notebook, laptop, handheld computer, or some other computing device. Certain devices may use an embedded operating system or a proprietary operating system.

Devices mentioned herein are generally capable of executing instructions stored on a computer-readable medium, such as instructions for performing one or more of the above-identified processes. Computer-executable instructions may be compiled or interpreted from computer programs created using a variety of known programming languages and/or technologies, including, without limitation, and either alone or in combination, Java, C, C++, Visual Basic, Java Script, Perl, etc. In general, a processor (e.g., a microprocessor) receives instructions, e.g., from a memory, a computer-readable medium, etc., and executes these instructions, thereby performing one or more processes, including one or more of the processes described herein. Such instructions and other data may be stored and transmitted using a variety of known computer-readable media.

A computer-readable medium (also referred to as a processor-readable medium) includes any tangible medium that participates in providing data (e.g., instructions) that may be read by a computer (e.g., by a processor of a computer, a microcontroller, etc.). Such a medium may take many forms, including, but not limited to, non-volatile media and volatile media. Non-volatile media may include, for example, optical or magnetic disks, read-only memory (ROM), and other persistent memory. Volatile media may include, for example, dynamic random access memory (DRAM), which typically constitutes a main memory. Common forms of computer-readable media include, for example, a floppy disk, a flexible disk, hard disk, magnetic tape, any other magnetic medium, a CD-ROM, DVD, any other optical medium, punch cards, paper tape, any other tangible medium with patterns of holes, a RAM, a PROM, an EPROM, a FLASH-EEPROM, any other memory chip or cartridge, or any other medium from which a computer can read.

A transmission media may facilitate the processing of instructions by carrying instructions from one component or device to another. For example, a transmission media may facilitate electronic communication between the local computer, the company e-mail server, the web server, and the database server. Transmission media may include, for example, coaxial cables, copper wire and fiber optics, including the wires that comprise a system bus coupled to a processor of a computer. Transmission media may include or convey acoustic waves, light waves, and electromagnetic emissions, such as those generated during radio frequency (RF) and infrared (IR) data communications.

SMail is an electronic stamp showing the sender's involvement in a humanitarian cause via an e-mail.

The method according to the invention enables individuals and companies to add value to their image by adding a stamp over the SMails they have chosen for all or part of their outgoing e-mails thanks to an application that can be downloaded.

When a recipient clicks on the SMail, he receives a link to a page on www.atpeople.net, presenting actions supported by the sender. The standardized presentation text is automatically displayed into the language of the recipient's browser.

One version of the application may be used by an individual Internet user.

Another version of the application may be used for companies, with a larger service offer depending on the volume of SMails sent during the subscription period.

WebService of the invention may propose for instance 7 categories of Business to Business SMails:
Fight against poverty
Action against AIDS
Environmental Protection
Nutrition Programs
Access to water
Girls' Education
Rescue and care Access

Each category of SMail may be displayed differently to the user, for example as different colored SMail icons. These supported causes have been selected on the basis of the Millenium Goals described by United Nations 2007 report.

Each subscribing company may have a login/password to access to its professional account in order to consult or modify the following information:
(1) Company information: i.e. administrative and contact information;
(2) Characteristics : i.e. the technical characteristics of the software, as regard the e-mail domains to be used with or excluded from the SMail mechanism;
(3) SMailings: the company can administrate its different SMailings, i.e. the different uses of a selected SMail during a certain period of time on selected e-mail domain(s)
(4) Downloading: last version of the software can be downloaded permanently from the client's account in any version
(5) Invoices: the client has a permanent access to its invoices
(6) Statistics: the company can consult its statistics with the percentage of use per category of SMail over the passed 12 months, with also a possibility to filter the data in function of the e-mail domains. The company can also have an exact report of the volume of outgoing SMails per month, the number of clicks per SMail and the ratio Number of clicks / number of outgoing SMails

A statistics tab may allow for the display of statistics. For example, the tab may show statistics over a period of time, such as for the current year. The statistics may be displayed in a grid and broken down according to month of the year. The statistics may also include totals for the entire year.

The statistics may further be broken down by SMail category. For example the statistics may show the percentage of SMails for each category for each month.

The statistics may further display the Number of SMails (Gross basis), Number of Clicks (Gross basis), and Ratio Clicks per SMail.

The statistics may be filtered, for example, according to e-mail domain.

All the data impacting software functionalities (characteristics, SMailings, etc.) may be synchronized with the locally downloaded application every 30 minutes.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claimed invention.

Accordingly, it is to be understood that the above description is intended to be illustrative and not restrictive.

## Claims

1. A method for sending an electronic mail from a computer, said method comprising:
- a step (1) of launching a local client software running on said computer,
- a step (6) of retrieving by said local client software configuration data associated with the account from a web service, said web service being configured to:
○ receive request to store configuration data indexed by account, said configuration data being stored in a database server and including supported electronic mail domains, excluded electronic mail senders, excluded electronic mail recipients, and electronic mail stamp settings ;
○ receive request from local client software for configuration data associated with the account,
○ retrieve the configuration data from the database server according to the request, and provide to local client software the configuration data in response to the request;
- a step of receiving by said local client software an electronic mail message to be sent;
- a step of determining whether to add an electronic mail stamp to said received electronic mail message based on said electronic mail message (24) and said retrieved configuration data (20, 21, 22, 23); and
- if the electronic mail stamp is to be added (9), a step (27) of adding the electronic mail stamp to the electronic mail message according to said retrieved configuration data.

2. Method according to claim 1 wherein said step of retrieving by said local client software configuration data is done periodically.

3. Method according to anyone of the previous claims wherein said step of determining whether to add an electronic mail stamp to said received electronic mail message based on said electronic mail message comprises a step (24) of determining whether said received electronic mail message is a text message and, if the received electronic mail message is a text message, a step of excluding said electronic mail message from having an electronic mail stamp included.

4. Method according to anyone of the previous claims wherein said step of determining whether to add an electronic mail stamp to said received electronic mail message based on said electronic mail message comprises a step (25) of determining whether said electronic mail message is encoded in base 64 and,
- if said electronic mail message is encoded in base 64, a step (26) of decoding said electronic mail message followed by the step (27) of adding the electronic mail stamp to the electronic mail message and the step of re-encoding the electronic mail message including said mail stamp;
- if said electronic mail message is not encoded in base 64, the step (27) of adding directly the electronic mail stamp to the electronic mail message.

5. Method according to anyone of the previous claims wherein said step (27) of adding the electronic mail stamp to the electronic mail message comprises a step (33, 34) of searching the beginning of the BODY section of said electronic mail message and the BODY end tag.

6. Method according to anyone of the previous claims, said method comprising a step (30) of determining whether said electronic mail message is configured to be sent to a gateway and,
- if said electronic mail message is configured to be sent to a gateway, a step (31) of sending said electronic mail message to said gateway;
- if said electronic mail message is not configured to be sent to a gateway, a step (32) of sending said electronic mail message to recipient(s) indicated by said electronic mail message.

7. Method according to anyone of the previous claims wherein said step (6) of retrieving by said local client software configuration data associated with the account from a web service comprises a step (13) of determining whether said local client software is up to date and, if the version of said local client software is less than the latest version, a step (14) of downloading a retrieve last version.

8. Method according to anyone of the previous claims wherein said local client software running on said computer is minimized (8) to an icon such as an icon in the system tray notification of the Microsoft Windows™ taskbar.

9. Method according to anyone of the previous claims wherein said step of receiving request by web service to store configuration data indexed by account comprised a step of selecting electronic mail stamp to be included in electronic mail message among a plurality of electronic mail stamp categories.

10. Method according to the previous claims wherein said step of selecting electronic mail stamp comprises a step of selecting a certain period of time and/or certain electronic mail domains for using said selected electronic mail stamp.
